# EUROPEAN PATENT APPLICATION

(11) **EP 1 676 878 A1**
(43) Date of publication of application: **05.07.2006**
(21) Application number: 05112695.1
(22) Date of filing: 22.12.2005
(51) Int. Cl.: C08K 7/02, C08K 9/08, C08J 5/04, B60C 1/00, B62D 55/00

(54) **Rubber compound with aramid-fiber-reinforced elastomeric composite having increased blow-out resistance**

(30) Priority: 30.12.2004 US 640662 P
(71) Applicant: THE GOODYEAR TIRE & RUBBER COMPANY, Akron, Ohio 44316-0001 (US)
(72) Inventor: Pilkington, Mervin Victor, 44319, Akron (US)
(74) Representative: Kutsch, Bernd

(57) **Abstract**

A vulcanizable rubber composition for use in vehicle endless-track pads and high-load pneumatic tires is disclosed, wherein the composition provides an increased resistance to blow-out when the vulcanizate product is exposed to high-repeated deflection. The composition comprises a rubber component compounded with an aramid fiber-elastomer composite. In one embodiment, the elastomer composite is present in an amount to provide an aramid fiber content of 1-6 parts per hundred parts of the rubber component (phr). In another exemplary embodiment, the rubber component consists essentially of natural rubber and the elastomer in the elastomer composite is natural rubber. The present invention also provides a method of preparing a solid elastomeric composite to be used in a rubber composition.

## Description

### Field of the invention

This invention relates to rubber compounds having an increased resistance to blow-out, particularly compounds that are subjected to high, repeated deflection, such as endless rubber tractor and tank tracks and high-load pneumatic tires.

### Background of the invention

Track-laying vehicles are broadly used in military and agricultural applications for their superior tracking capability in rough terrain. Track-laying vehicles, wherein a continuous track is constantly laid down in the direction of movement of the associated vehicle, are well known. Examples of such track-laying devices are military tanks, personnel carriers, various tractors and other agricultural vehicles including, for example, combines and spreaders, as well as various earth moving machines. A track on a track-laying vehicle is under tremendous strain and severe wearing conditions when the vehicle is in operation. This is especially true with modern track-laying vehicles where the vehicle is expected to carry a high load and be capable of superior acceleration and speed.

Current track designs use rubber pads (track pads), also referred to as treads, to enhance traction, isolate vibration, reduce noise, and limit damage to paved surfaces. The pads can be made integral with the track, or can be bonded to steel plates that are then bolted to the track. Conventional tread members are molded of hard rubber materials. The durability of the rubber and thus the lifetime of the tread has been and remains a problem in the design of a track. The most commonly seen problems with rubber-molded tread members are overheating, which causes blow-outs and catastrophic failure of the rubber, chunking, where large pieces of rubber material fall off the tread member, and rapid wear due to the poor abrasion resistance of the rubber material. In the case of blow-outs, the severe overheating seems to cause the inside of the pad to vaporize. These problems with rubber track pads also exist with the treads of pneumatic tires that are subjected to high loads, such as tires on agricultural and industrial equipment.

There is a need to provide a rubber compound that has an increased resistance to blow-out when exposed to high-repeated deflection, for use in endless rubber tracks and other high-load tires. Previous efforts to improve blow-out resistance generally involve materials that reduce or prevent thermal or mechanical reversion where the vulcanizate reverts back to the gum state, thus reducing the increase in viscous or loss modulus. One effort involved adding fiber to the rubber compound, but the fiber was poorly dispersed and increased the compound hysteresis and heat build-up and created flaws in the compound that induced cracking. Blow-out in track pads and other heavy equipment tires continues to be a problem, such that an improvement to the rubber compounds is needed.

### Summary of the invention

The present invention provides a vulcanizable rubber composition and a vulcanizate thereof for use in vehicle endless-track pads and high-load pneumatic tires, wherein the composition provides an increased resistance to blow-out when the vulcanizate product is exposed to high-repeated deflection. To this end, a base rubber component is compounded with an elastomeric composite of aramid fiber homogeneously distributed in a matrix elastomer. The elastomeric composite to be compounded with the rubber component, in accordance with the present invention, may be made by mixing aramid fiber with a latex of the matrix elastomer until the aramid fiber is homogeneously distributed in the latex, coagulating the latex to form a coagulated elastomeric composite, removing water from the coagulated elastomeric composite, and extruding the elastomeric composite. Alternatively, the elastomeric composite may be made by dissolving the matrix elastomer in a solvent and homogeneously dispersing the fibers in the elastomer solution, followed by evaporating the solvent from the homogeneous dispersion. In one embodiment, the elastomeric composite is a Kevlar® Engineered Elastomer made by dispersing Kevlar® pulp in a natural rubber latex, coagulating the latex, and dewatering and extruding the fiber-elastomer composite. In another exemplary embodiment, the elastomeric composite is present in an amount effective to provide a fiber content of 1-6 parts per hundred parts of the base rubber component (phr). In yet another exemplary embodiment, the base rubber component consists essentially of natural rubber. The present invention also provides an endless rubber track for a track-laying vehicle comprising a rubber pad that is a vulcanizate of the vulcanizable rubber composition. In addition, the present invention provides a pneumatic tire for a high-load vehicle comprising a rubber tread that is a vulcanizate of the vulcanizable rubber composition.

### Detailed description

The present invention provides rubber compounds having increased blow-out resistance by virtue of the addition of an aramid-fiber-reinforced elastomeric composite to a base rubber component, such as natural rubber. The elastomeric composite is produced by homogeneously pre-dispersing an aramid fiber in an elastomeric latex or solution, and processing the pre-dispersion to form a solid composite. Where the fiber is dispersed in a solution of the matrix elastomer in an organic solvent, the solvent is driven out, whereby the fiber-elastomer composite crumbles. Where the fiber is dispersed in an elastomer latex, the latex is coagulated, extruded and dried to form the crumbled solid composite. Kevlar® brand fiber produced by E.I. du Pont de Nemours & Co. is one example of an aramid fiber that may be pre-dispersed in an elastomer latex or solution, such as a natural rubber latex or solution, and converted to a solid elastomeric composite by coagulation and extrusion or solvent evaporation for subsequent use in the compound of the present invention. Kevlar® Engineered Elastomers and other similar elastomers are known in the art. However, the present invention resides in the discovery that an aramid-fiber-reinforced elastomeric composite is effective as an additive to increase blow-out resistance in rubber compounds. The fiber-reinforced elastomeric composite surprisingly increased the low strain modulus and blow-out resistance without increasing heat build-up. In one embodiment, the fiber-reinforced elastomeric composite is made by dispersing the aramid fiber in an elastomer latex until homogeneously distributed, then coagulating the fiber-filled latex, and then extruding the composite. The water removal from the coagulated latex to form the solid composite may occur before, during, and/or after extrusion. In another embodiment, the fiber-reinforced elastomeric composite is made by dispersing the aramid fiber in a solution of a matrix elastomer until the aramid fiber is homogeneously distributed, followed by solvent removal. The solvent may be an organic solvent. The pre-dispersion of the fiber in the elastomer latex or solution to essentially provide an elastomer-treated fiber permits good dispersion of the fiber in the rubber compound and provides improved properties at a lower fiber level, as well as eliminates the higher hysteresis in the rubber compound found when untreated fibers are used.

In its broadest form, the rubber compound of the present invention comprises a rubber component, for example natural rubber, and an aramid-fiber-reinforced elastomeric composite, also referred to herein as a fiber-elastomer composite, as well as other known rubber compound additives appropriate for the particular use of the rubber compound. Such known additives include reinforcing fillers such as carbon black and silica, stearic acid, zinc oxide, antidegradants, coupling agents, lubricants, process oils and curing additives. The vulcanized rubber compound, i.e., the vulcanizate, may be used, for example, in the track pads of endless rubber tracks for various vehicles such as military tanks and agricultural tractors, or in the treads of pneumatic tires subjected to high loads.

In one embodiment of the present invention, the rubber component consists essentially of 100 parts by weight of natural rubber. Alternatively, the rubber component of the composition may be natural rubber in combination with one or more desired elastomers. For example, natural rubber may be used in combination with synthetic cis 1,4-polyisoprene, cis 1,4-polybutadiene, styrene/butadiene copolymers (aqueous emulsion polymerization prepared and organic solvent solution polymerization prepared), medium vinyl polybutadiene having a vinyl 1,2- content in a range of 15 to 90 percent, isoprene/butadiene copolymers, styrene/isoprene/butadiene terpolymers, nitrile/butadiene copolymers, EPDM, and/or butyl rubber. It may be understood that rubber refers to natural rubber as well as synthetic elastic materials of varying chemical composition having properties similar to those of natural rubber, namely polymers that exhibit highly elastic deformation and have high elongation. The term "elastomer" may also be used interchangeably with "rubber", and refers to any elastic, rubber-like substance, such as natural or synthetic rubber.

"Aramid-fiber-reinforced elastomeric composite" and "fiber-elastomer composite" are used interchangeably throughout to refer to the composite added to the composition of the present invention which is made by homogeneously pre-dispersing an aramid fiber in an elastomer latex or solution, then processing the fiber-filled latex or solution to form a solid composite. The fiber-elastomer composite may be present in the rubber composition in an amount to provide a fiber content of 1-6 phr (parts per hundred rubber). In one embodiment, the fiber-elastomer composite is present in an amount to provide a fiber content of 1.5-3 phr. By way of example, if the fiber-elastomer composite has a 23% pulp concentration, then 4.3-26.1 phr of the fiber-elastomer composite will provide the 1-6 phr fiber content. Similarly, for a 23% pulp concentration, 6.5-13 phr of the fiber-elastomer composite will provide a 1.5-3 phr fiber content.

DuPont provides a product line of fiber-elastomer composites referred to as Kevlar® brand Engineered Elastomers. Kevlar® brand pulp is used for the fiber component, and various elastomers are used for the matrix elastomer. For example, the matrix elastomer may be natural rubber or synthetic rubbery compounds, such as polychloroprene, sulfur-modified chloroprene, hydrocarbon rubbers, butadiene-acrylonitrile copolymers, styrene butadiene rubbers, chlorosulfonated polyethylene, fluoroelastomers, polybutadiene rubbers, or polyisoprene rubbers. In an exemplary embodiment of the present invention, the matrix elastomer is the same as an elastomer in the base rubber component. In an exemplary embodiment, the base rubber component consists essentially of natural rubber, and the fiber-elastomeric composite is a fiber-natural rubber composite.

In one embodiment of the present invention, the fiber-elastomer composite may be made in accordance with US-B- 5,205,972 and US-B-5,205,973. As described therein, an elastomer latex is used to provide the matrix elastomer. The term "latex" is understood to refer to a stable dispersion, suspension or emulsion of a polymer (in this case, an elastomer) in an essentially aqueous medium. The polymer is dispersed, but not dissolved, in water. Generally, the latex has a solids content of 10-80%. As is known in the art, latex may be produced by mixing an emulsifying agent with a monomer and water to form an emulsion, and then polymerizing the emulsion. To form the fiber-elastomer composite, aramid fiber either in solid form or as an aqueous slurry is mixed with the latex using conventional mixing techniques, such as low or high shear mixers, until the fiber is homogeneously distributed. The latex is then coagulated by mixing a coagulant with the fiber-latex dispersion with agitation. Suitable coagulants include, without limitation, aqueous solutions of salts such as calcium chloride, aluminum sulfate, sodium chloride, sodium sulfate, or sodium acetate. Mechanical coagulation is also contemplated. The fiber-latex dispersion may be coagulated in an extruder, or prior to being fed to an extruder. In the extruder, the coagulated fiber-latex mixture is then subjected to a dewatering process to substantially remove water from the fiber-latex using flow restriction. The fiber-elastomer composite may then be discharged from the extruder in a damp crumb form and subsequently dried to remove excess liquid. Alternatively, the extruder can be provided with a subatmospheric pressure zone downstream from the flow restriction for removal of any remaining water from the coagulated fiber-latex composite by vacuum so as to dry the composite before it is discharged in crumb form from the extruder.

In another embodiment of the present invention, the fiber-elastomer composite may be made in accordance with US-B- 5,391,623. As described therein, an elastomer resin is first dissolved in enough organic solvent to yield a complete solution, generally 1-4 weight parts of solvent for each part of elastomer. Once the solution is prepared, the aramid pulp is added with agitation forces as necessary to afford complete dispersion of the individual pulp particles, wherein pulp refers to both aramid pulp and short aramid fibers known as floc. Alternatively, the pulp can be added before the elastomer is completely dissolved, or even combined with dry particles of the elastomer before adding the solvent. Then, as the solvent dissolves the elastomer, the pulp becomes dispersed in the elastomer solution. Once the pulp has been homogeneously distributed or dispersed in the elastomer solution, the solvent is evaporated from the dispersion, preferably under continued agitation forces. Solvent removal can be facilitated by heating the dispersion and using forced air or inert gas or by applying a vacuum. As the solvent is driven out, the composition of elastomer and aramid pulp crumbles to small particles or flakes. It is this composition of elastomer and aramid pulp, which is generally in crumb or flake form, that may be used as the fiber-elastomer composite in the composition of the present invention.

An exemplary Kevlar® brand Engineered Elastomer is sold by DuPont under Product No. 1F722 and includes a natural rubber matrix elastomer with a 23% pulp concentration produced by the latex method. However, the fiber component of the elastomer composite is not limited to Kevlar® fibers. Rather, any aramid fibers, particularly in pulp form, may be used in the fiber-elastomer composite. Examples of other commercially available fibers include Nomex® from DuPont, Basofil® from Basofil Fibers, Twaron® from Teijin Twaron, TeijinConex® from Teijin Twaron, and Technora® also from Teijin Twaron. Kevlar®, Twaron®, and Technora® are all examples of para-aramid fibers, while Nomex®, Basofil®, and TeijinConex® are all examples of meta-aramid fibers. Thus, any para-aramid or meta-aramid fiber may be dispersed in an elastomer latex or solution, such as by the processes disclosed in US-B- 5,205,972, US-B-5,205,973 and US-B- 5,391,623, to produce an aramid-fiber-reinforced elastomer composite that may be compounded with a base rubber component to provide a rubber compound of the present invention having increased blow-out resistance. More generically, the aramid fiber may be selected from the group consisting of: poly-(paraphenylene terephthalamide), co-poly-(paraphenylene/3,4'-oxydiphenylene terephthalamide), or poly-(metaphenylene isophthalamide).

In addition to the rubber component and fiber-elastomer composite, the composition of the present invention may also include fillers. Commonly employed reinforcing fillers include, for example, carbon black and siliceous fillers such as precipitated silica. Fillers may be used, for example, in an amount of 10-250 phr. In one embodiment, the fillers comprise 20-100 phr of the composition.

The composition of the present invention may also include antidegradants, for example in the range of 4.5-10 phr. Such antidegradants may be a combination of antiozonants and antioxidants for rubber compositions as conventionally used for cured rubber compositions intended to be exposed to atmospheric conditions and dynamic applications. Representative examples of such antidegradants are, for example, polymerized 2,2,4-trimethyl 1,2-dihydroquinoline, which might be obtained as Flectol® TMQ from the Flexsys America L.P. Company, N-1,3-dimethylbutyl-N'-phenol para-phenylenediamine, which might be obtained as Flexzone® 7F and mixed with aryl-p-phenylene diamines, such as Wingstay® 100 from The Goodyear Tire and Rubber Company.

Use of rubber processing oils in a range of 0-10 phr, for example 1-10 phr, may be used to enhance processability of the unvulcanized rubber composition as well as to enhance the balance of a combination of tensile strength and elongation of a sulfur vulcanized rubber composition. Rubber processing oils may include, for example, aromatic hydrocarbon oils, naphthenic oils, paraffinic oils or ester oils. Aromatic rubber processing oils as well as mixtures of alkylated naphthenic and aromatic hydrocarbon rubber process oils, and their use as processing aids, are well known to those having skill in the preparation of rubber compositions.

It is readily understood by those having skill in the art that the rubber composition may be compounded by methods generally known in the rubber compounding art, such as mixing the various sulfur-vulcanizable constituent rubbers with various commonly used additive materials such as, for example: sulfur donors; curing aids, such as activators and retarders; processing additives, such as oils; resins, including tackifying resins and plasticizers; fillers; pigments; fatty acid; zinc oxides; waxes; antioxidants; antiozonants; and peptizing agents. As known to those skilled in the art, depending on the intended use of the sulfur-vulcanizable and sulfur-vulcanized material (rubbers), the additives mentioned above are selected and commonly used in conventional amounts. By way of example, a typical amount of zinc oxide is 2-10 phr, and of stearic acid is 0.5-3 phr.

Representative examples of sulfur donors, also referred to as sulfur-vulcanizing agents, include elemental sulfur (free sulfur), an amine disulfide, polymeric polysulfide and sulfur olefin adducts. In an exemplary embodiment of the present invention, the sulfur-vulcanizing agent is elemental sulfur. By way of example only, the sulfur-vulcanizing agent may be used in an amount of 0-8 phr, for example, 0.1-8 phr. Accelerators may be used to control the time and/or temperature required for vulcanization and to improve the properties of the vulcanizate. One or a combination of accelerators may be used to achieve the desired cure. Examples of accelerators that may be used include amines, disulfides, guanidines, thioureas, thiazoles, thiurams, sulfenamides, dithiocarbamates and xanthates.

The mixing of the rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, accelerators/retarders and scorch inhibitors, are typically mixed in the final productive mix stage, which typically occurs at a temperature (sometimes referred to as the ultimate temperature) lower than the mix temperature(s) of the preceding non-productive mix stage(s). The rubber composition may be subjected to a thermo-mechanical mixing step in the non-productive mix stage. The thermo-mechanical mixing step generally comprises a mechanical working in a mixer or extruder for a period of time suitable to produce a rubber temperature between 140°C and 190°C. The appropriate duration of the thermo-mechanical working varies as a function of the operating conditions and the volume and nature of the components. For example, the thermo-mechanical working may be from 1 to 20 minutes.

After mixing, the resulting uncured rubber compounds may be extruded to form, for example, one or more sections of a track for an endless track pad, which may then be inserted into a suitable mold and cured at a temperature of, for example, 150°C to form a continuous track. Alternatively, the resulting compound may be cured in a mold for making pneumatic tires.

### Examples

Ten test compositions, referred to as Tests 1-10, were prepared containing various amounts of a Kevlar® Engineered Elastomer (Product No. 1 F722 from DuPont), which has a 23% pulp concentration and a natural rubber matrix, in combination with a natural rubber base component and various known additives. In Tests 1-4, the amount of fiber-elastomer composite was based upon 100 parts of the base rubber component, i.e., the natural rubber. In Tests 5-10, the base natural rubber component content was decreased such that the base natural rubber component plus the natural rubber of the fiber-elastomer composite together totals 100 parts by weight. Three control samples, referred to as Controls 1-3, were prepared with the natural rubber base component and the same additives, but with no fiber-elastomer composite. The compositions for the test and control samples are provided in Table 1. The compositions were then cured and subjected to numerous tests to demonstrate the effect of the fiber-elastomer composite in increasing blow-out resistance, among other things.

The results show an improvement in the blow-out times and increased low strain modulus with no detrimental effects on the other properties compared to the control compositions. In addition, the optimum level of the fiber-elastomer composite in the compositions of the present invention was found to be on the order of 9 phr to provide a fiber content of 2.1 phr. For example, the use of 9 phr of fiber-elastomer composite to provide the composition with a 2.1 phr fiber content increased the time-to-failure by more than 3 times compared to the Control Samples, as well as lowered the tangent Delta values and increased the low strain modulus of the composition in either extension or compression.

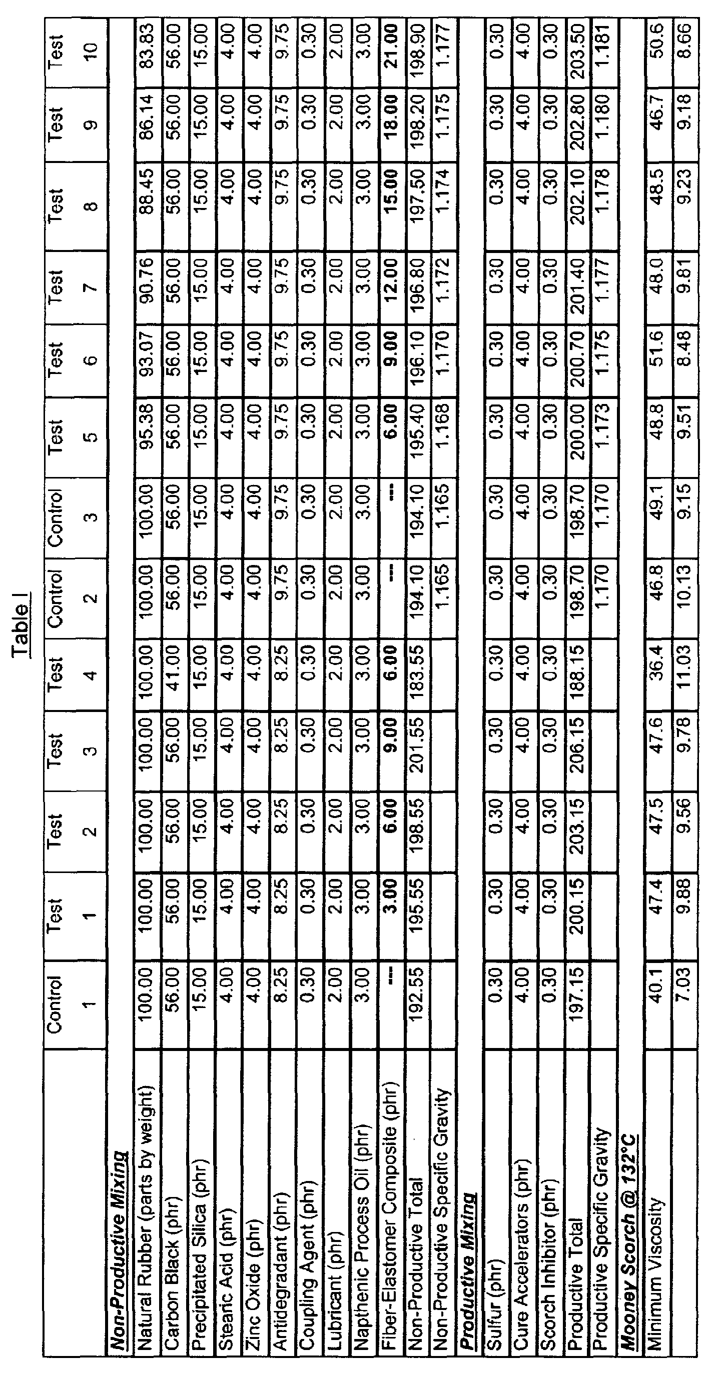

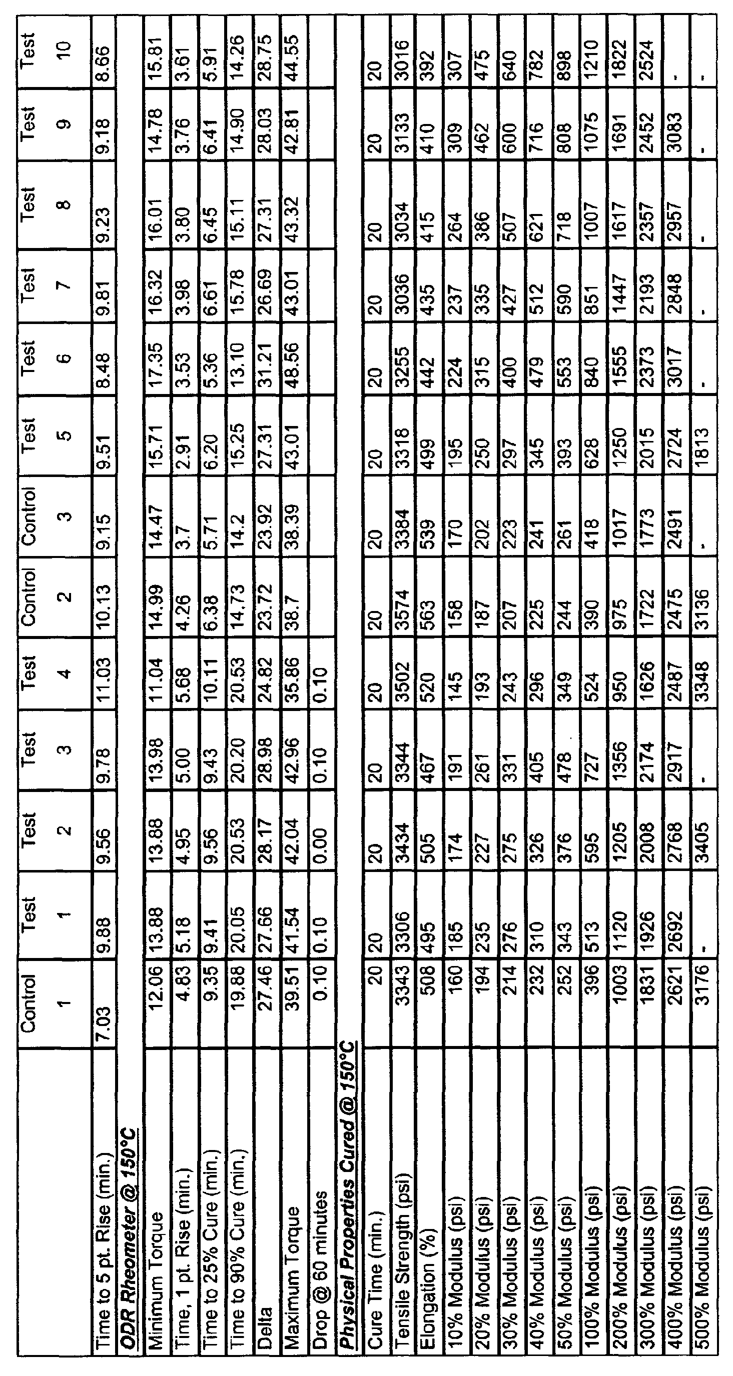

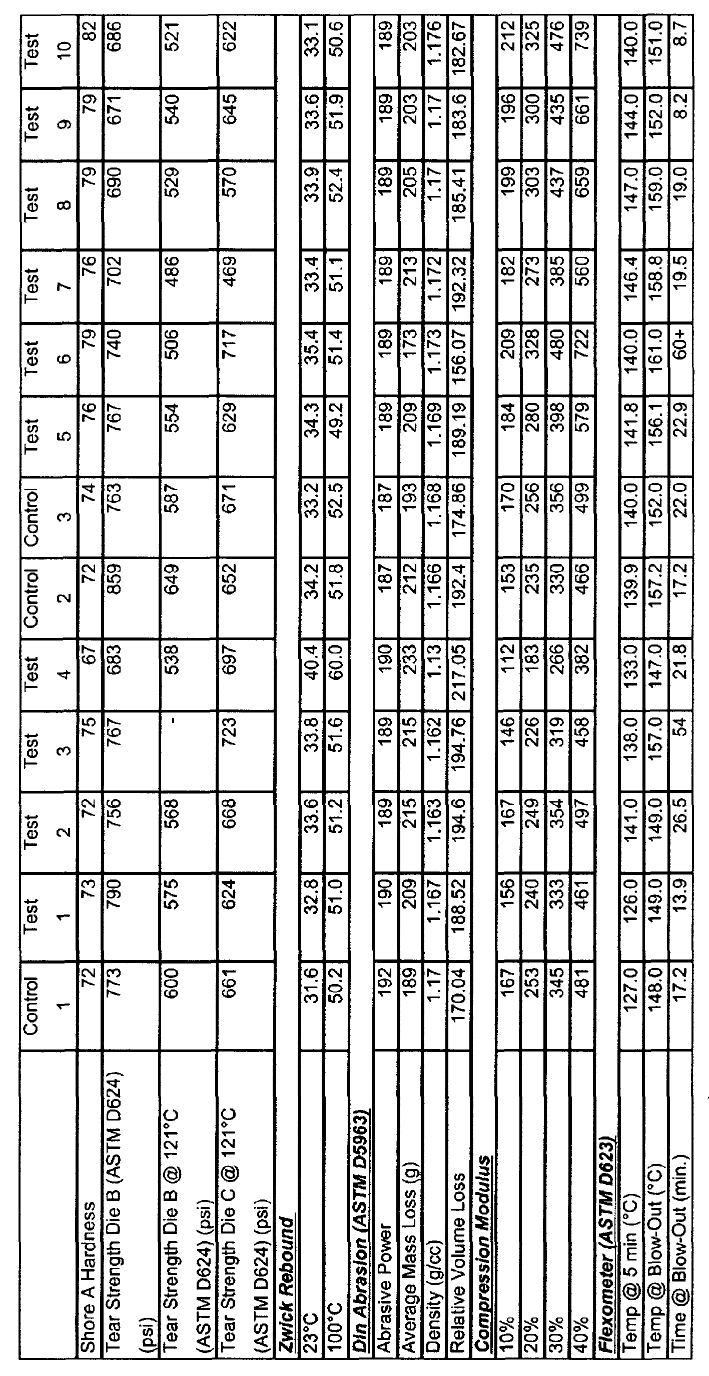

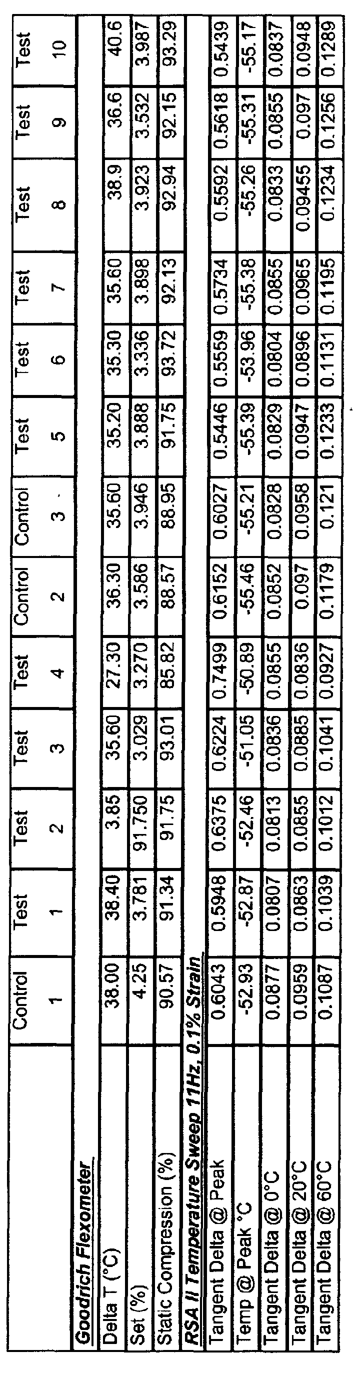

## Claims

1. A method of preparing a solid elastomeric composite comprising an aramid fiber dispersed in a matrix elastomer, the method comprising the steps of:
(a) dispersing the aramid fiber in a solution of the matrix elastomer until the aramid fiber is homogeneously distributed, followed by solvent removal; or
(b) dispersing the aramid fiber in an elastomer latex comprising the matrix elastomer dispersed in an aqueous medium, coagulating the elastomer latex, removing the aqueous medium, and extruding the elastomeric composite.

2. A vulcanizable rubber composition comprising a base rubber component and a solid elastomeric composite of an aramid fiber being homogeneously dispersed in a matrix elastomer, wherein the elastomeric composite is present in an amount effective to provide the composition with a content of the aramid fiber of 1-6 parts per hundred parts of the base rubber component (phr), and wherein the solid elastomeric composite is made by one of the following processes:
(a) dispersing the aramid fiber in a solution of the matrix elastomer until the aramid fiber is homogeneously distributed, followed by solvent removal; or
(b) dispersing the aramid fiber in an elastomer latex comprising the matrix elastomer dispersed in an aqueous medium, coagulating the elastomer latex, removing the aqueous medium, and extruding the elastomeric composite.

3. The vulcanizable rubber composition of claim 2, wherein the base rubber component consists essentially of natural rubber, wherein the matrix elastomer is a natural rubber matrix, wherein the solid elastomeric composite is formed by mixing an aqueous slurry of the aramid fiber with a latex of the natural rubber matrix until the aramid fiber is homogeneously distributed in the latex, coagulating the latex to form a coagulated elastomeric composite, removing water from the coagulated elastomeric composite, and extruding the elastomeric composite, and wherein the rubber composition further comprises:
10-250 phr of a reinforcing filler comprising carbon black and silica;
4.5-10 phr of an antidegradant;
1-10 phr of a processing oil;
2-10 phr of zinc oxide;
0.5-5 phr of stearic acid; and
0.1-8 phr of a vulcanizing agent.

4. The composition of claim 2, wherein the base rubber component consists essentially of natural rubber and/or wherein the matrix elastomer is natural rubber.

5. The composition of claim 2 or 3, wherein the elastomeric composite is present in an amount effective to provide 1.5-3 phr of the aramid fiber.

6. The composition of at least one of the claims 2-5, wherein the aramid fiber is poly-(paraphenylene terephthalamide), co-poly-(paraphenylene/3,4'-oxydiphenylene terephthalamide) or poly-(metaphenylene isophthalamide).

7. The composition of claim 2, further comprising at least one reinforcing filler selected from carbon black or silica, or mixtures thereof.

8. The composition of claim 2, further comprising at least one antidegradant selected from antiozonants and antioxidants and/or comprising at least one processing oil and/or comprising at least one sulfur-vulcanizing agent.

9. An endless rubber track for a track-laying vehicle comprising a rubber pad that is a vulcanizate of the composition of any of the previous claims 2-8.

10. A pneumatic tire for a high-load vehicle comprising a rubber tread that is a vulcanizate of the composition of any of the previous claims 2-8.
